# EUROPEAN PATENT SPECIFICATION

(11) **EP 1 249 774 B1**
(45) Date of publication and mention of the grant of the patent: **05.04.2006**
(21) Application number: 01306991.9
(22) Date of filing: 17.08.2001
(51) Int. Cl.: H04L 12/28, H04L 12/56, H04L 29/06

(54) **Method and apparatus for supplying information remotely via a mobile device**
Verfahren und Vorrichtung zur ferngesteuerten Bereitstellung von Information durch ein mobiles Kommunikationsgerät
Méthode et système pour exécuter à distance la provision d'information via un dispositif de communication mobile

(30) Priority: 28.02.2001 SG 200101253; 27.09.2000 SG 200005507
(43) Date of publication of application: 16.10.2002
(73) Proprietor: Hewlett-Packard Company, Palo Alto, CA 94304 (US)
(72) Inventor: Gomes, John Isaac Chandan, Singapore 449031 (SG); Tan, Ngee Chuan, Singapore 588195 (SG)
(74) Representative: Jehan, Robert

(56) References cited:
- EP-A- 0 893 760
- EP-A- 0 954 147
- WO-A-97/35402
- WO-A-99/45684
- WO-A-99/61984

## Description

This invention relates to a method and an apparatus for applying remotely stored information, especially emails, via a mobile device.

Conventionally, after receiving an email with or without attachment a user can apply the received information to an appliance. For example, the user can generate a hard copy of it by transmitting the received information from the computer to an appliance, such as a printer connected to the computer directly or via a network, or as a fax machine. When the user is traveling, however, he needs a portable media like a laptop for retrieving emails and for accessing and processing them. If he wants a printed version of the email and/or the attachment, he has to connect the laptop to an appropriate appliance, and quite often, to install the appliance. These may not be desirable, especially for a user who travels often.

With the advent of mobile revolution, mobile devices such as mobile phones and personal digital assistants provide a solution to access information or data remotely. Some devices even allow the user to store some information in them. Nevertheless, the user of the mobile devices cannot apply the information to an appliance conveniently in that he still needs to physically connect the devices with an appliance. Furthermore, due to the compactness and the limitation of size, most mobile devices are short of storage space and processing power. Inevitably, this shortage limits the capacity of information or data that a user can store or retrieve. Besides, some mobile devices like mobile phones do not even allow applications like WinWord™ to be run on them. Therefore, users of these mobile devices are restrained from accessing documents created by these applications.

The document EP0954147 discloses a data communications system. A 2-way interactive communications device communicates with a link server. The user selects a destination and data to be used. The request is forwarded by the link server to another server processes the data according to the request. The document EP0893760 discloses a document handling system. Tokens are associated with documents held on a server. A device can arrange remote processing of a document by reference to its respective token, the document W09735402 discloses a proxy interface for the world wide web.

The present invention seeks to provide improved data handling for a mobile device.

An embodiment of the invention, provides a convenient method and apparatus to allow a user of a mobile device to apply remotely stored information, especially emails, to an appliance.

In an embodiment according to one aspect of the invention, in a method for applying information to an appliance via a mobile device, the mobile device initiates the process by transmitting an information request to a computer system via a first communication network. The computer system generates a list of all available information. The list of all available information is then transmitted from the computer system via the first communication network to the mobile device. The mobile device designates from the list of available information a designated information to be processed and the appliance to which the designated information is to be applied as instructions. The instructions are transmitted from the mobile device to the computer system via the first communication network. The computer system retrieves the designated information and applies the designated information to the designated appliance via a second communication network for processing.

According to another aspect of the invention, a computer system has a first interface for receiving both information requests and instructions from the mobile device via a first communication network. The information requests initiate generating a list of all available information. The instructions designate from all available information-a designated information to be processed and the appliance to which the designated information is to be applied. The appliance is connected to the computer system at a second interface via a second communication network. The computer system has a server computer system for processing and answering the information requests, for processing the instructions and for applying the designated information to the appliance for processing.

The preferred embodiments allow a user to retrieve his emails received by an email server by using his mobile device without the need of an unwieldy laptop. He may check the subjects of the emails at the display of his mobile device and apply designated emails to an appropriate appliance, for instance, in his neighborhood. Therefore, the user needs neither to directly connect an unwieldy laptop to the appropriate appliance by a physical connection nor to install the appliance by an appropriate driver for the appliance. Furthermore, they provide the possibility to print attached documents generated by applications with a huge need of computing resources from the mobile device, which itself does not provide sufficient calculating resources.

Embodiments of the present invention are described below, by way of example only, with reference to the accompanying drawings, in which:
Figure 1 illustrates a first embodiment of the invention; and
Figure 2 illustrates a second embodiment of the invention.

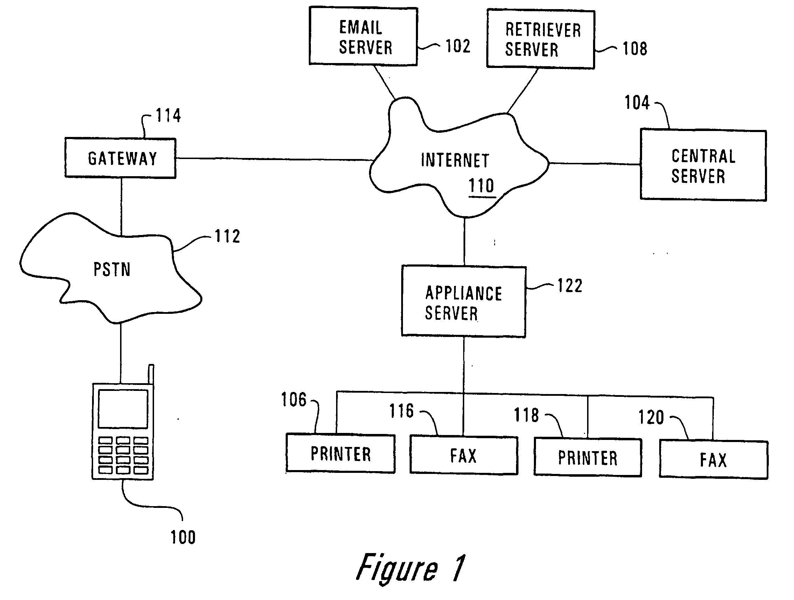

In a first embodiment of the invention as shown in **Figure 1**, a user of a mobile device 100 such as a mobile phone can print emails with or without attachments stored in an email server 102 via both a central server 104 and a printer 106. - If not specially pointed out in the following, the term "email" means likewise emails with or without attachments. Attachments can be, for instance, documents generated by usual computer programs like WinWord. To enable the user to access the emails remotely from his standard email receiving computer (not shown), the emails have to be downloaded from the email server 102 to a retriever server 108 via the internet 110.

When the user is away from his standard email receiving computer and wants a printed copy of his emails, the user may use his mobile phone 100 to request the email server 102 for information about received emails. The request reaches the central server 104 via a Public Switched Telephone Network (PSTN) 112, a gateway 114 and the internet 110. For communication between the mobile device 100 and the gateway 114, standard telecommunication protocols such as Wireless Application Protocols (WAP) are used. It is understood that WAP is used as a transport layer protocol based on the transport layer GSM. Higher data rate transport layers such as 3G or as Telco can also be used. In the context of WAP, the mobile phone is WAP-enabled, and the request from the mobile device 100 is in the following illustrative format:
- WAP Header
- Email Server
- Email Protocol
- Username
- User Password
- WAP Trailer.

The parameter "Email Server" designates the email server 102, where the user "owns" an email account, and the parameter "Email Protocol" specifies the format, which has to be used when communicating with the email server 102. The parameters "Username" and "User Password" designate and allow communication with the email account of the user for retrieving received emails from the email server 102. The gateway 114 converts the request to an HTTP format suitable for transfer through the internet 110.

The request of the gateway 114 is packed into an HTTP packet in an illustrative format shown below:
- HTTP header
- /MapleWML/CMServer/AddEmail.asp
- Email Server
- Email Protocol
- Username (for identifying at the email server 102)
- User Password (for the purpose of security)
- HTTP Trailer.

Such an HTTP packet then will be transmitted to the central server 106 via the internet 108. In this embodiment, upon receiving it, the central server 106 is activated by the parameter "/MapleWML/CMServer/AddEmail.asp" to run a script. Thus the information following this parameter, i.e., the parameters "Email Server," "Email Protocol," "Username," and "User password," is needed at the central server 106 to run and execute the script.

It is noted that the mobile device 100 needs to install settings for identifying the gateway 114 and the central server 104 in advance. The mobile device 100 will then be able to contact the appropriate central server 104 via the appropriate gateway 114. Such a technology is well known in the field of wireless communication.

After receiving the request, the central server 104 instructs the retriever server 108 via the internet 110 to download the received emails of the user from the specified email server 102 in the specified email protocol format and to generate a list of available emails. Such an email protocol format can be, for instance, IMAP4 or POP3. Alternative email protocol formats can also be used. The retriever server 108 then transmits a retrieving request comprising the parameters "Username" and "User Password" to the email server 102 via the internet 110.

After receiving the retrieving request, the email server 102 packs the received emails and transmits them to the retrieving server 108 via the internet 110 as a response to the retrieving request. The response comprises the following parameters:
- Numbers of Emails
- Size of each Email
- Size of Attachments of each Email
- Email Content,
where the parameters "Number of Emails," "Size of each Email" and "Size of Attachments of each Email" enable the retriever server 108 to split the "Email Content" in individual received emails with or without attachments and to store all available emails in an email database (not shown). The retriever server 108 now generates a list of available emails for the particular user, that is, a list of all emails, which are downloaded to the retriever server 108 and stored in the email database for the particular user.

After generating the list of available emails, the retriever server 108 packs a reply in the following illustrative HTTP format:
- HTTP Header
- List of Emails
- HTTP Trailer,
where the parameter "List of Emails" includes the list of available emails for the particular user at the retriever server 108. The retriever server 108 further transmits its reply through the established connections via both the internet 110 and the central server 104 towards the gateway 114, which in turn would convert the reply into a WAP format for displaying on the mobile device 100.

The user selects an email to be printed from the list of available emails and a printer 106 to which the email is to be printed via the mobile device 100. Such selections are incorporated into instructions, printing instructions in the case of this embodiment, by the mobile device 100 according to the following illustrative format:
- WAP Header
- Username
- User Password
- Designated Email
- Appliance ID
- WAP Trailer.

The parameter "Designated Email" identifies the email to be printed, while the parameter "Appliance ID" identifies the appliance to which the email is to be applied. In the case of printing an email, the "Appliance ID" will be the printer name of a selected printer 106.

The mobile device 100 then transmits the printing instructions to the central server 104 via the PSTN 112, the gateway 114, and the internet 110. After receiving such instructions, the central server 104 stores the parameter "Appliance ID" in an appliance database (not shown). The central server 104 requests for the email designated by the parameter "Designated Email" to be uploaded from the retriever server 108 by transmitting to the retriever server 108 the contents of the parameter "Designated Email". The central server 104 identifies and requests the retriever server 108 according to the parameters of "Username" and "User Password."

The retriever server 108 accordingly packs the email identified by the parameter "Designated Email" into an HTTP packet, for example:
- HTTP Header
- /MapIeUVMUCMServer/EmailUpload.asp
- Username
- User Password
- Designated Email
- Size of the Email
- Size of Attachments of the Email
- Job_ID
- Email Content
- HTTP Trailer,
wherein the parameter "Job_ID" identifies the source of the job, especially, where the email to be printed comes from. The parameter "/MapleWML/CMServer/ EmailUpload.asp" will initiate the central server 104 to retrieve the information contained therein, including the designated email which is contained in "Email Content."

Further, the email server 102 needs to be publicly accessible, that is, in a public domain so that by using its Username and User Password, other computers or servers can access and retrieve emails from it.

Additionally, a plurality of appliances, including, for example, the printer 106, a fax machine 116, a further printer 118, and a further fax machine 120, are connected to an appliance server 122 and are registered in the central server 104. The appliance server 122 tells the central server 104 which appliances are logged in and tells the central server 104 the Appliance Identities (IDs) of the individual appliances and appliance server Internet Protocol (IP) address. The appliances get registered by the appliance server 122 which is transmitting to the central server 104 via the internet 110, for example, an HTTP packet in the following illustrative format:
- HTTP header
- /MapleWML/CMServer/ApplianceLogin.asp
- Appliance ID
- Password for the Appliance Server
- Appliance Server IP Address
- HTTP Trailer,
where the parameter "/MapleWMl/CMServer/ApplianceLogin.asp" activates the central server 104 to run a script such that the information following this parameter in the packet will be loaded into the appliance database of the central server 104. The parameter "Appliance ID," for example, the appliance name, identifies the appliance to be registered. The parameter "Appliance Server IP Address" helps the central server 104 to locate the appliance server 122, and further to know where the appliances are.

The central server 104 transmits the designated email as well as the parameter "Appliance ID" as stored in the appliance database and designated in the printing instructions, e.g., by the printer name, to the appliance server 122 via the internet 110. The central server 104 is able to locate the appliance server 122 through the parameter "Appliance Server IP Address." The appliances such as the printer 106, the fax machine 116, the further printer 118, and the further fax machine 120, are connected to the appliance server 122 as already mentioned above. The appliance server 122 is installed with all the necessary applications and drivers of those connected appliances, in particular, printer drivers of the connected printers 106 and 118.

The appliance server 122 converts the email as well as, if existing, attached documents to a format suitable for the designated appliance. In the present embodiment, the document is converted to a print job in a Page Descriptive Language (PDL) format. According to the printing instruction, the print job is passed to the designated printer 106 identified by the parameter "Appliance ID," e.g., the printer name. A hard copy of the email and of possibly attached documents will be then generated.

After applying the email to the designated appliance and after completely processing the email by the designated appliance, the appliance server 122 transmits a message with the value "finished" or otherwise "fault" to the central server 104. The central server 104 converts the message and transmits it via the internet 110 to the mobile device 100 via a short message service (SMS). Such a message in a SMS packet may have the following illustrative format:
- SMS header
- Designated Email
- Appliance ID
- Status
- SMS Trailer,
where the parameters "Designated Email" and "Appliance ID" tell the user, which email he has transmitted to which appliance. Finally, the parameter "Status" tells the user, whether applying his email is finished or broken off due to a fault.

Alternatively, the user can apply the email to other appliances such as the fax machines 116 and 120. The user needs to designate the appliance in the instructions being transmitted to the central server 104 by incorporating the appropriate appliance identity into the instructions. Accordingly, the appliance server 122 converts the retrieved email and possibly attached documents to a format suitable for the designated appliance and further passes it to the appliance.

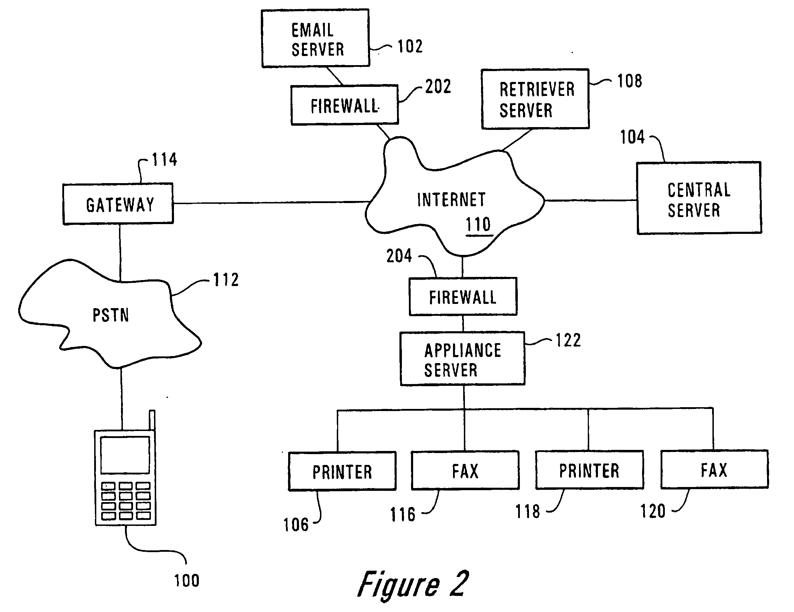

A second embodiment of the invention is shown in Figure 2. The difference between the second embodiment and the first embodiment of the invention is the existence of a first firewall 202 protecting the email server 102 and of a second firewall 204 protecting the appliance server 122. The protection is mainly designated against attacks, e.g., unauthorized inquiries, from the internet 110.

Then, the retriever server 108 is not able to start a communication with the email server 102. The email server 102 instead periodically polls the retriever server 108. Given at least one request of the retriever server 108 for the corresponding email server 102, the retriever server 108 is allowed to communicate with the email server 102 due to the polling action of the email server 102.

Similarly, the central server 104 is not able to start a communication with the appliance server 122. The appliance server 122 instead periodically polls the central server 104. Given at least one email to be applied from the central server 104 to the appliance server 122, the central server 104 is allowed to communicate with the appliance server 122 due to the polling action of the appliance server 122.

Alternatively, the email server 102 as well as the retriever server 108 are together protected by the first firewall 202. Then, the central server 104 is not able to start a communication, neither with the email server 102 nor with the retriever server 108. The retriever server 108 instead retrieves all available emails from the email server 102 and generates the list of available emails. Further, the retriever server 108 periodically polls the central server 104. Given at least one request of the central server 104 for the corresponding email server 102, the retriever server 108 transmits the list of available emails to the central server 104 due to the polling action of the retriever server 108.

As a further alternative, the central server 104 and the retriever server 108 are incorporated together in one common server (not shown). Then, the common server downloads the received emails from the email server 102 and generates the list of available emails without the need of a separate retriever server 108.

Other alternatives can be made to the above described embodiments. For example, the emails can be forwarded to and stored in the central server 104 in advance so that the central server 104 will retrieve the emails directly from its storage unit (not shown). The appliances can also be connected to the central server 104 directly, in which case the central server 104 also acts as appliance server 122.

Additionally, other mobile devices 100 such as personal digital assistants can be used on condition that they are able to communicate with the gateway 114.

In the following, some alternative embodiments of the invention will be described.

In one embodiment, the information is stored in a first sub-computer system. Then, the first part of the response to the information request comprises four steps. In the first step a second sub-computer system is instructed via a third communication network to download all available information from the first sub-computer system to the second sub-computer system. The second step comprises downloading all available information from the first sub-computer system to the second sub-computer system via a fourth communication network. As third step, the list of all available information is generated by the second sub-computer system. In the fourth step finally the list of all available information is transmitted from the second sub-computer system via the third communication network to the computer system.

The computer system may convert the designated information to a formatted information suitable for the appliance according to the instructions. Then, the formatted information is transmitted from the computer system to the appliance via the second communication network. Finally, the formatted information is applied to the appliance for processing.

In one embodiment, at least two of the group comprising the first communication network, the second communication network, the third communication network, and the fourth communication network, can share a part of one common communication network, for instance the internet.

A plurality of appliances may be registered in the computer system. The plurality of appliances can be connected to the computer system via the second communication network. The mobile device designates a first appliance from the plurality of appliances by specifying it in the instructions.

In this preferred embodiment, the plurality of appliances is connected to an appliance server, which is a remote part of the computer system. The appliance server is provided for converting the designated information to the formatted information suitable for the appliance.
Furthermore, the first communication network includes a gateway with which the mobile device communicates by using standard telecommunication protocols. The gateway converts the instructions to a format which the computer system understands. Preferably, the instructions are converted to a format suitable for transfer through the internet.

The first appliance can be a printer or a fax machine. In one embodiment, the first appliance is a printer and the computer system converts the information to a print job in a format suitable for printing, for instance a PDL format.

The second sub-computer system may be able to download all available information from the first sub-computer system only if the first sub-computer system polls the second sub-computer system. This may be due to a first firewall protecting the first sub-computer system against attacks, e.g., unauthorized inquiries. Similarly, the computer system may be able to transmit the formatted information to the appliance only if the appliance polls the computer system, because the appliance is protected by a second firewall against attacks, e.g., unauthorized inquiries.

In one embodiment, the computer system transmits a message to the mobile device after applying the formatted information to the appliance. Preferably, such a message is an information about completion of applying the formatted information to the appliance. The message may be transmitted to the mobile device via a short message service (SMS).

Given the information being stored in a first sub-computer system, which is connected to the computer system, and the information requests designating the first sub-computer system, the computer system further comprises a third interface connected to the server computer system for receiving the information sent from the first sub-computer system via a third communication network.

The computer system may further comprise a fourth interface connected to the server computer system for sending the information received from the first sub-computer system to a second sub-computer system via a fourth communication network.

Given the first communication network, the second communication network, the third communication network, and/or the fourth communication network being a part of one common communication network, the first interface, the second interface, the third interface, and/or the fourth interface are realized by one common interface.

The server computer system may convert the designated information to a format suitable for the appliance.

In this embodiment, the appliance is a printer and the server computer system converts the designated information to a print job in a format suitable for printing on the printer.

## Claims

1. A method of applying information to an appliance via both a mobile device (100) and a central server (104), the method being **characterised by** the steps of:
transmitting an information request from the mobile device (100) to the central server (104) via a first communication network (112);
generating a list of all available information at the central server (104) by:
instructing via a second communication network (110) a retriever server (108) to download all available information from a first computer system (102);
downloading all the available information to the retriever server (108);
generating the list of all available information by the retriever server. (108); and
transmitting the list of all available Information from the retriever server (108) via the second communication network (110) to the central server (104);
transmitting the list of all available information from the central server (104) via the first communication network (112) to the mobile device (100);
designating from the list of all available information a designated information to be processed and the appliance (106, 116, 118, 120) to which the designated information is to be applied as instructions in the mobile device (100);
transmitting the instructions from the mobile device (100) to the central server (104) via the first communication network (112); and
retrieving the designated information and applying the designated Information to the appliance via the second communication network (110) for processing according to the instructions.

2. A method as in claim 1, including the steps of:
converting the designated information to a formatted information suitable for the appliance (106, 116, 118, 120) according to the instructions;
transmitting the formatted information to the appliance (106, 116, 118, 120) via the second communication network (110) according to the instructions; and
applying the formatted information to the appliance (106, 116, 118, 120) for processing according to the instructions.

3. A method as in claim 1 or 2, wherein a plurality of appliances (106, 116, 118, 120) are connected to the central server (104) via an appliance server (122), the mobile device (100) designating the appliance (106, 116, 118, 120) among said plurality of appliances (106, 118, 118, 120) in the instructions.

4. A method as in claim 3, wherein said plurality of appliances (106, 116, 118, 120) are registered in the appliance server (122).

5. A method as in claim 3, wherein the mobile device (100) designates the appliance (106, 118, 118, 120) by specifying the appliance identity In the instructions.

6. A method as in claim 3, wherein the appliance server (122) converts the designated information to a formatted information suitable for the appliance (106, 116, 118, 120).

7. A method as in any preceding claim, wherein the first communication network (112) includes a gateway (114) with which the mobile device (100) communicates by using standard telecommunication protocols, and the gateway (114) converts the instructions to a format which the central server (104) understands.

8. A method as in any preceding claim, wherein the appliance is a printer (106, 118), and the designated information is converted into a print job in a format suitable for printing.

9. A method as in claim 8, wherein the designated information is converted into a PDL format suitable for printing.

10. A method as in claim 1, wherein the retriever server (108) is only able to download all available information from the first computer system (102) if the first computer system (102) polls the retriever server (108).

11. A method as in claim 3, wherein the central server (104) is only able to transmit the information to the appliance server (122) if the appliance server (122) polls the central server (104).

12. A method as In any preceding claim, wherein the central server (104) transmits a message to the mobile device (100) after applying the designated information to the appliance (106, 116, 118, 120).

13. A computer system operable to allow a user of a mobile device (100) to apply information to an appliance (106, 116, 118, 120) designated by the mobile device (100), the computer system including a central server (104) and a retriever server (108),
the central server (104) being arranged to receive an Information request from the mobile device (100) via a first communication network (112) and generate a list of all available information by instructing, via a second communication network (110), the retriever server (108) to download all available information from a first computer system (102)
the retriever server being responsive to instructions from the central server to download all the available information from the first computer system (102), generate the list of all available information and transmit the list of all available information via the second communication network (110) to the central server (104):
wherein the central server is further arranged:
upon receipt of the list of all available information to transmit the list via the first communication network (112) to the mobile device (100); and,
upon receipt of instructions from the mobile device (100), the instructions including a designated information from the list and the appliance (106, 116, 118, 120) to which the designated information is to be applied, to retrieve the designated information and apply the designated information to the appliance via the second communication network (110) for processing according to the instructions.

14. A computer system as in claim 13, further comprising an appliance server (122), the appliance server being connectable to a plurality of appliances (106, 116, 118. 120) and being arranged to receive the instructions and designated information from the central server (104) for application to the respective appliance (106, 118, 120).

15. A computer system as in claim 14, wherein said plurality of appliances (106, 116, 118, 120) are registered in the appliance server (122).

16. A computer system as in claim 14 or 15, wherein the appliance server (122) is arranged to convert the designated information to a formatted information suitable for the appliance (106, 116, 118, 120).

17. A computer system as in any of claims 13 to 16, further comprising a gateway (114) arranged to communicate with the mobile device (100) using standard telecommunication protocols, wherein the gateway (114) is arranged to convert the instructions to a format which the central server (104) understands.

18. A computer system as in any of claims 13 to 17, wherein the retriever server (108) is arranged to download all available information from the first computer system (102) upon being polled by the first computer system (102).

19. A computer system as in any of claims 13 to 18, wherein the central server (104) is arranged to transmit the information to the appliance server (122) upon being polled by the appliance server (122).

## Patentansprüche

1. Ein Verfahren zum Zuführen von Informationen zu einer Vorrichtung über sowohl ein mobiles Gerät (100) als auch einen zentralen Server (104), wobei das Verfahren durch folgende Schritte **gekennzeichnet** ist:
Übertragen einer Informationsanforderung von dem mobilen Gerät (100) über ein erstes Kommunikationsnetzwerk (112) zu dem zentralen Server (104);
Erzeugen einer Liste aller verfügbaren Informationen an dem zentralen Server (104) durch:
Anweisen eines Wiedergewinnungsservers (108) über ein zweites Kommunikationsnetzwerk (110), alle verfügbaren Informationen von einem ersten Computersystem (102) herunterzuladen;
Herunterladen aller verfügbaren Informationen auf den Wiedergewinnungsserver (108);
Erzeugen der Liste aller verfügbaren Informationen durch den Wiedergewinnungsserver (108); und
Übertragen der Liste aller verfügbaren Informationen von dem Wiedergewinnungsserver (108) über das zweite Kommunikationsnetzwerk (110) zu dem zentralen Server (104);
Übertragen der Liste aller verfügbaren Informationen von dem zentralen Server (104) über das erste Kommunikationsnetzwerk (112) zu dem mobilen Gerät (100);
Bestimmen bestimmter Informationen von der Liste aller verfügbaren Informationen, die zu verarbeiten sind, und der Vorrichtung (106, 116, 118, 120), der die bestimmten Informationen als Befehle in dem mobilen Gerät (100) zuzuführen sind;
Übertragen der Befehle von dem mobilen Gerät (100) über das erste Kommunikationsnetzwerk (112) zu dem zentralen Server (104); und
Wiedergewinnen der bestimmten Informationen und Zuführen der bestimmten Informationen über das zweite Kommunikationsnetzwerkwerk (110) zu der Vorrichtung zum Verarbeiten gemäß den Befehlen.

2. Ein Verfahren gemäß Anspruch 1, das folgende Schritte umfasst:
Umwandeln der bestimmten Informationen in formatierte Informationen, die für die Vorrichtung (106, 116, 118, 120) gemäß den Befehlen geeignet sind;
Übertragen der formatierten Informationen über das zweite Kommunikationsnetzwerk (110) an die Vorrichtung (106, 116, 118, 120) gemäß den Befehlen; und
Zuführen der formatierten Informationen zu der Vorrichtung (106, 116, 118, 120) zum Verarbeiten gemäß den Befehlen.

3. Ein Verfahren gemäß Anspruch 1 oder 2, bei dem eine Mehrzahl von Vorrichtungen (106, 116, 118, 120) über einen Vorrichtungsserver (122) mit dem zentralen Server (104) verbunden sind, wobei das mobile Gerät (100) die Vorrichtung (106, 116, 118, 120) von der Mehrzahl von Vorrichtungen (106, 116, 118, 120) in den Befehlen bestimmt .

4. Ein Verfahren gemäß Anspruch 3, bei dem die Mehrzahl von Vorrichtungen (106, 116, 118, 120) in dem Vorrichtungsserver (122) registriert sind.

5. Ein Verfahren gemäß Anspruch 3, bei dem das mobile Gerät (100) die Vorrichtung (106, 116, 118, 120) bestimmt durch Spezifizieren der Vorrichtungsidentität in den Befehlen.

6. Ein Verfahren gemäß Anspruch 3, bei dem der Vorrichtungsserver (122) die bestimmten Informationen in formatierte Informationen umwandelt, die für die Vorrichtung (106, 116, 118, 120) geeignet sind.

7. Ein Verfahren gemäß einem der vorhergehenden Ansprüche, bei dem das erste Kommunikationsnetzwerk (112) einen Netzübergang (114) umfasst, mit dem das mobile Gerät (100) durch Verwenden von Standardtelekommunikationsprotokollen kommuniziert, und der Netzübergang (114) die Befehle in ein Format umwandelt, die der zentrale Server (104) versteht.

8. Ein Verfahren gemäß einem der vorhergehenden Ansprüche, bei dem die Vorrichtung ein Drucker (106, 118) ist und die bestimmten Informationen in einen Druckauftrag in einem Format umgewandelt werden, das zum Drucken geeignet ist.

9. Ein Verfahren gemäß Anspruch 8, bei dem die bestimmten Informationen in ein PDL-Format umgewandelt werden, das zum Drucken geeignet ist

10. Ein Verfahren gemäß Anspruch 1, bei dem der Wiedergewinnungsserver (108) nur in der Lage ist, alle verfügbaren Informationen von dem ersten Computersystem (102) herunterzuladen, falls das erste Computersystem (102) den Wiedergewinnungsserver (108) abfragt.

11. Ein Verfahren gemäß Anspruch 3, bei dem der zentrale Server (104) nur in der Lage ist, die Informationen zu dem Vorrichtungsserver (122) zu übertragen, falls der Vorrichtungsserver (122) den zentralen Server (104) abfragt.

12. Ein Verfahren gemäß einem der vorhergehenden Ansprüche, bei dem der zentrale Server (104) eine Mitteilung an das mobile Gerät (100) überträgt, nach dem Zuführen der bestimmten Informationen zu der Vorrichtung (106, 116, 118, 120).

13. Ein Computersystem, das wirksam ist, um es einem Benutzer eines mobilen Geräts (100) zu ermöglichen, Informationen einer Vorrichtung (106, 116, 118, 120) zuzuführen, die durch das mobile Gerät (100) bestimmt wird, wobei das Computersystem einen zentralen Server (104) und einen Wiedergewinnungsserver (108) umfasst,
wobei der zentrale Server (104) angeordnet ist, um eine Informationsanforderung über ein erstes Kommunikationsnetzwerkwerk (112) von dem mobilen Gerät (100) zu empfangen und eine Liste aller verfügbaren Informationen zu erzeugen durch Anweisen des Wiedergewinnungsservers (108) über ein zweites Kommunikationsnetzwerkwerk (110), alle verfügbaren Informationen von einem ersten Computersystem (102) herunterzuladen,
wobei der Wiedergewinnungsserver auf Befehle von dem zentralen Server anspricht, um alle verfügbaren Informationen von dem ersten Computersystem (102) herunterzuladen, die Liste aller verfügbaren Informationen zu erzeugen und die Liste aller verfügbaren Informationen über das zweite Kommunikationsnetzwerk (110) zu dem zentralen Server (104) zu übertragen;
wobei der zentrale Server ferner angeordnet ist, um:
auf den Empfang der Liste aller verfügbaren Informationen hin, die Liste über das erste Kommunikationsnetzwerk (112) zu dem mobilen Gerät (100) zu übertragen; und
auf den Empfang von Befehlen von dem mobilen Gerät (100) hin, wobei die Befehle bestimmte Informationen von der Liste umfassen und die Vorrichtung (106, 116, 118, 120), zu der die bestimmten Informationen zugeführt werden sollen, die bestimmten Informationen wiederzugewinnen und die bestimmten Informationen über das zweite Kommunikationsnetzwerk (110) zu der Vorrichtung zuzuführen, zum Verarbeiten gemäß den Befehlen.

14. Ein Computersystem gemäß Anspruch 13, das ferner einen Vorrichtungsserver (122) umfasst, wobei der Vorrichtungsserver mit einer Mehrzahl von Vorrichtungen (106, 116, 118, 120) verbindbar ist, und angeordnet ist, um die Befehle und bestimmten Informationen von dem zentralen Server (104) zu empfangen, zum Zuführen zu der entsprechenden Vorrichtung (106, 116, 118, 120).

15. Ein Computersystem gemäß Anspruch 14, bei dem die Mehrzahl von Vorrichtungen (106, 116, 118, 120) in dem Vorrichtungsserver (122) registriert ist.

16. Ein Computersystem gemäß Anspruch 14 oder 15, bei dem der Vorrichtungsserver (122) angeordnet ist, um die bestimmten Informationen in formatierte Informationen umzuwandeln, die für die Vorrichtung (106, 116, 118, 120) geeignet sind.

17. Ein Computersystem gemäß einem der Ansprüche 13 bis 16, das ferner einen Netzübergang (114) umfasst, der angeordnet ist, um unter Verwendung von Standardtelekommunikationsprotokollen mit dem mobilen Gerät (100) zu kommunizieren, wobei der Netzübergang (114) angeordnet ist, um die Befehle in ein Format umzuwandeln, das der zentrale Server (104) versteht.

18. Ein Computersystem gemäß einem der Ansprüche 13 bis 17, bei dem der Wiedergewinnungsserver (108) angeordnet ist, um auf das Abgefragtwerden durch das erste Computersystem (102) hin alle verfügbaren Informationen von dem ersten Computersystem (102) herunterzuladen.

19. Ein Computersystem gemäß einem der Ansprüche 13 bis 18, bei dem der zentrale Server (104) angeordnet ist, um auf das Abgefragtwerden durch den Vorrichtungsserver (122) hin die Informationen zu dem Vorrichtungsserver (122) zu übertragen.

## Revendications

1. Procédé consistant à appliquer des informations à un appareil via à la fois un dispositif mobile (100) et un serveur central (104), le procédé étant **caractérisé par** les étapes consistant à :
■ transmettre une demande d'information du dispositif mobile (100) au serveur central (104) via un premier réseau de communication (112) ;
■ générer une liste de toutes les informations disponibles au serveur central (104) en :
■ donnant des instructions via un second réseau de communication (110) à un serveur de recherche (108) pour télécharger toutes les informations disponibles d'un premier système informatique (102) ;
■ téléchargeant toutes les informations disponibles au serveur de recherche (108) ;
■ générant la liste de toutes les informations disponibles par le serveur de recherche (108) ; et en
■ transmettant la liste de toutes les informations disponibles du serveur de recherche (108) via le second réseau de communication (110) au serveur central (104) ;
■ transmettre la liste de toutes les informations disponibles du serveur central (104) via le premier réseau de communication (112) au dispositif mobile (100) ;
■ indiquer de la liste des informations disponibles une information indiquée qui doit être traitée et l'appareil (106, 116, 118, 120) auquel l'information indiquée doit être appliquée en tant qu'instructions dans le dispositif mobile (100) ;
■ transmettre les instructions du dispositif mobile (100) au serveur central (104) via le premier réseau de communication (112) ; et
■ rechercher l'information indiquée et appliquer l'information indiquée à l'appareil via le second réseau de communication (110) pour un traitement selon les instructions.

2. Procédé selon la revendication 1, incluant les étapes consistant à :
■ convertir l'information indiquée en une information formatée appropriée pour l'appareil (106, 116, 118, 120) selon les instructions ;
■ transmettre l'information formatée à l'appareil (106, 116, 118, 120) via le second réseau de communication (110) selon les instructions ; et
■ appliquer l'information formatée à l'appareil (106, 116, 118, 120) pour un traitement selon les instructions.

3. Procédé selon la revendication 1 ou 2, dans lequel une pluralité d'appareils (106, 116, 118, 120) sont connectés au serveur central (104) via un serveur d'appareil (122), le dispositif mobile (100) indiquant l'appareil (106, 116, 118, 120) parmi ladite pluralité d'appareils (106, 116, 118, 120) dans les instructions.

4. Procédé selon la revendication 3, dans lequel ladite pluralité d'appareils (106, 116, 118, 120) sont enregistrés dans le serveur d'appareil (122).

5. Procédé selon la revendication 3, dans lequel le dispositif mobile (100) indique l'appareil (106, 116, 118, 120) en spécifiant l'identité de l'appareil dans les instructions.

6. Procédé selon la revendication 3, dans lequel le serveur d'appareil (122) convertit l'information indiquée en une information formatée appropriée pour l'appareil (106, 116, 118, 120).

7. Procédé selon n'importe quelle revendication précédente, dans lequel le premier réseau de communication (112) inclut une passerelle (114) avec laquelle le dispositif mobile (100) communique en utilisant les protocoles de télécommunication standard et la passerelle (114) convertit les instructions en un format que le serveur central (104) comprend.

8. Procédé selon n'importe laquelle revendication précédente, dans lequel l'appareil est une imprimante (106, 118) et l'information indiquée est convertie en un travail d'imprimante dans un format approprié pour une impression.

9. Procédé selon la revendication 8, dans lequel l'information indiquée est convertie en un format LDP (langage de description de page) approprié pour une impression.

10. Procédé comme la revendication 1, dans lequel le serveur de recherche (108) est seulement capable de télécharger toutes les informations disponibles provenant du premier système informatique (102) si le premier système informatique (102) appelle le serveur central (108).

11. Procédé selon la revendication 3, dans lequel le serveur central (104) est seulement capable de transmettre les informations au serveur d'appareil (122) si le serveur d'appareil (122) appelle le serveur central (104).

12. Procédé selon n'importe quelle revendication précédente, dans lequel le serveur central (104) transmet un message au dispositif mobile (100) après l'application des informations indiquées à l'appareil (106, 116, 118, 120).

13. Système informatique utilisable pour permettre à un utilisateur d'un dispositif mobile (100) d'appliquer des informations à un appareil (106, 116, 118, 120) indiqué par le dispositif mobile (100), le système informatique incluant un serveur central (104) et un serveur de recherche (108),
■ le serveur central (104) étant prévu pour recevoir une demande d'information provenant du dispositif mobile (100) via un premier réseau de communication (112) et pour générer une liste de toutes les informations disponibles en donnant des instructions, via un second réseau de communication (110), au serveur de recherche (108) pour télécharger toutes les informations disponibles provenant d'un premier système informatique (102)
■ le serveur de recherche étant réactif aux instructions provenant du serveur central pour télécharger toutes les informations disponibles provenant du premier système informatique (102), pour générer la liste de toutes les informations disponibles et pour transmettre la liste de toutes les informations disponibles via le second réseau de communication (110) au serveur central (104) ;
■ dans lequel le serveur central est, en outre, prévu :
■ lors de la réception de la liste de toutes les informations disponibles, pour transmettre la liste via le premier réseau de communication (112) au dispositif mobile (100) ; et
■ lors de la réception des instructions provenant de l'appareil mobile (100), les instructions incluant une information indiquée provenant de la liste et l'appareil (106, 116, 118, 120) auquel l'information indiquée doit être appliquée, pour rechercher l'information indiquée et pour appliquer l'information indiquée à l'appareil via le second réseau de communication (110) pour un traitement selon les instructions.

14. Système informatique selon la revendication 13, comprenant, en outre, un serveur d'appareil (122), le serveur d'appareil pouvant être connecté à une pluralité d'appareils (106, 116, 118, 120) et étant prévu pour recevoir les instructions et l'information indiquée du serveur central (104) pour une application aux appareils respectifs (106, 118, 120).

15. Système informatique selon la revendication 14, dans lequel ladite pluralité d'appareils (106, 116, 118, 120) sont enregistrés dans le serveur d'appareil (122).

16. Système informatique selon la revendication 14 ou 15, dans lequel le serveur d'appareil (122) est prévu pour convertir l'information indiquée en une information formatée appropriée pour l'appareil (106, 116, 118, 120).

17. Système informatique selon l'une quelconque des revendications 13 à 16, comprenant, en outre, une passerelle (114) prévue pour communiquer avec le dispositif mobile (100) en utilisant les protocoles de télécommunication standards, dans lequel la passerelle (114) est prévue pour convertir les instructions en un format que le serveur central (104) comprend.

18. Système informatique selon l'une quelconque des revendications 13 à 17, dans lequel le serveur de recherche (108) est prévu pour télécharger toutes les informations disponibles provenant du premier système informatique (102) lorsqu'il est appelé par le premier système informatique (102).

19. Système informatique selon l'une quelconque des revendications 13 à 18, dans lequel le serveur central (104) est arrangé pour transmettre les informations au serveur d'appareil (122) lorsqu'il est appelé par le serveur d'appareil (122).
